# FASCICULE DE BREVET EUROPEEN

(11) **EP 0 796 176 B1**
(45) Date de publication et mention de la délivrance du brevet: **04.11.1998**
(21) Numéro de dépôt: 95940225.6
(22) Date de dépôt: 21.11.1995
(51) Int. Cl.: B60C 15/00

(54) **PNEUMATIQUE A ARMATURE DE CARCASSE RADIALE**
REIFEN MIT RADIALER KARKASSE
TYRE WITH A RADIAL CARCASS REINFORCEMENT

(30) Priorité: 05.12.1994 FR 9414688
(43) Date de publication de la demande: 24.09.1997
(73) Titulaire: COMPAGNIE GENERALE DES ETABLISSEMENTS MICHELIN - MICHELIN & CIE, 63040 Clermont-Ferrand Cédex (FR)
(72) Inventeur: BILLIERES, Jean, F-63100 Clermont-Ferrand (FR)
(74) Mandataire: Devaux, Edmond-Yves
(86) Numéro de dépôt international: EP9504582
(87) Numéro de publication internationale: WO9617734

(56) Documents cités:
- EP-A- 0 077 161
- WO-A-82/04225
- WO-A-95/09090
- DE-A- 3 600 145
- PATENT ABSTRACTS OF JAPAN vol. 017 no. 541 (M-1488) ,29 Septembre 1993 & JP,A,05 147413 (SUMITOMO RUBBER IND LTD) 15 Juin 1993,

## Description

L'invention concerne un pneumatique à armature de carcasse radiale sans chambre à air indépendante, et plus particulièrement destiné à l'équipement de véhicules du type Poids Lourds tel que camions, autobus, métropolitains et ensembles tracteurs-remorques.

De tels pneumatiques sont montés sur deux types de jante : les jantes dites à base creuse, possédant des sièges tronconiques inclinés par rapport à l'axe de rotation et faisant avec le dit axe un angle pouvant varier de 5° à 15°, et les jantes à fond plat ou pratiquement plat, ayant des sièges inclinés soit à 0°, soit à 5° par rapport à l'axe de rotation.

Les jantes, dites à base creuse, comportent une gorge de montage dont le diamètre est nettement inférieur au diamètre nominal de la jante. Ce diamètre intérieur de la jante est considéré par les utilisateurs comme trop petit, et il ne permet pas de choisir des tambours de freins de dimensions adaptées à un freinage efficace d'un véhicule de plus en plus puissant.

Il est donc hautement souhaitable d'augmenter le diamètre de fond de jante, et, dans toute la mesure du possible, sans augmenter le diamètre hors tout de l'ensemble roulant, ce qui revient à abaisser le rapport de forme H/S du pneumatique, H étant la hauteur du pneumatique sur jante et S sa largeur axiale maximale.

Dans d'autres cas, il est avantageux de diminuer le diamètre hors-tout de l'ensemble roulant formé par le pneumatique et la jante sans diminuer le diamètre de la jante, et en particulier dans le but d'abaisser le centre de gravité des remorques ou semi-remorques tractées. Un pneumatique dont le rapport de forme H/S diminue tout en conservant sensiblement la largeur axiale maximale normalisée, représente une solution pour le problème ci-dessus.

La mise au point de pneumatiques Poids-Lourds avec des rapports de forme inférieurs à 0,8 est très délicate ; en particulier, l'endurance des bourrelets devient nettement moindre au fur et à mesure que le rapport H/S diminue, les insuffisances de l'endurance se situant au niveau des extrémités de retournements de l'armature de carcasse ou des extrémités de nappes de renforcement localisées dans les bourrelets du pneumatique, l'architecture desdits bourrelets étant une architecture usuelle avec, dans chaque bourrelet, un retournement d'armature de carcasse et des nappes de renforcement dont les profils méridiens sont sensiblement parallèles au profil méridien de l'armature de carcasse dans la zone desdits bourrelets. En outre une telle architecture entraîne un manque de confort notable, ce qui est parfaitement insupportable pour de longs trajets sur des routes plus ou moins bosselées.

La demande FR-A-2 710 584, se propose de remédier à de tels inconvénients. Elle concerne un pneumatique dont l'armature de carcasse radiale est enroulée dans chaque bourrelet autour de la tringle en allant de l'extérieur à l'intérieur du pneumatique pour former un retournement qui est, vu en section méridienne, situé à l'intérieur d'un angle délimité par deux demi-droites tangentes à la tringle, la demi-droite la plus proche de l'axe de rotation étant parallèle audit axe et ledit angle étant au plus égal à 45°.

Pour des raisons économiques, un tel retournement est disposé dans une protubérance axialement interne du pneumatique. Si une économie réelle est réalisée au niveau de la matière, la fabrication d'un tel pneumatique, plus longue, plus compliquée, et demandant plus de précision, est coûteuse.

En vue d'abaisser le coût industriel de fabrication, la présente invention propose un pneumatique à armature de carcasse radiale, surmontée radialement d'une armature de sommet, l'armature de carcasse étant composée d'au moins une nappe de fils ou câbles et étant retournée dans chaque bourrelet autour d'une tringle d'ancrage en allant de l'extérieur à l'intérieur pour former un retournement, ledit retournement étant renforcé par au moins une nappe de renforcement additionnelle de câbles orientés par rapport à la direction circonférentielle d'un angle compris entre 0° et 20°, la valeur 0° étant incluse dans ledit intervalle, caractérisé en ce que le profil méridien dudit retournement renforcé est rectiligne et sensiblement parallèle au profil méridien d'au moins la portion de siège de jante située axialement à l'intérieur de la projection du centre du cercle circonscrit à la tringle sur ledit siège de jante.

Il faut entendre par sensiblement parallèle à la portion de jante le profil de retournement faisant avec l'axe de rotation du pneumatique un angle compris entre la valeur égale à l'angle de la génératrice de ladite portion de jante moins 5° et la valeur égale au même angle de la génératrice plus 5°.

De manière préférentielle, le retournement de nappe de carcasse sera ancré entre deux nappes de renforcement additionnelles disposées radialement de part et d'autre dudit retournement, et constituées de câbles métalliques orientés circonférentiellement.

Il est de même avantageux de disposer axialement à l'extérieur et/ou à l'intérieur de l'armature de carcasse, au niveau du rebord de jante, une armature de renforcement additionnelle, formée d'au moins une nappe de renforcement composée de fils ou câbles, métalliques ou textiles et orientés par rapport à la direction circonférentielle d'un angle compris entre 0° et 30°, l'angle de 0° étant inclus dans l'intervalle considéré.

A fin d'obtenir une endurance satisfaisante des bourrelets du pneumatique en cas de roulage avec échauffement non négligeable desdits bourrelets (calories en provenance de la jante de montage), le retournement aura préférentiellement une largeur axiale, mesurée parallèlement à l'axe de rotation et axialement à partir du point de tangence O de l'armature de carcasse avec le cercle circonscrit à la tringle, au moins égale à 0,06 fois la largeur axiale maximale du pneumatique monté sur sa jante de service et gonflé à sa pression nominale recommandée.

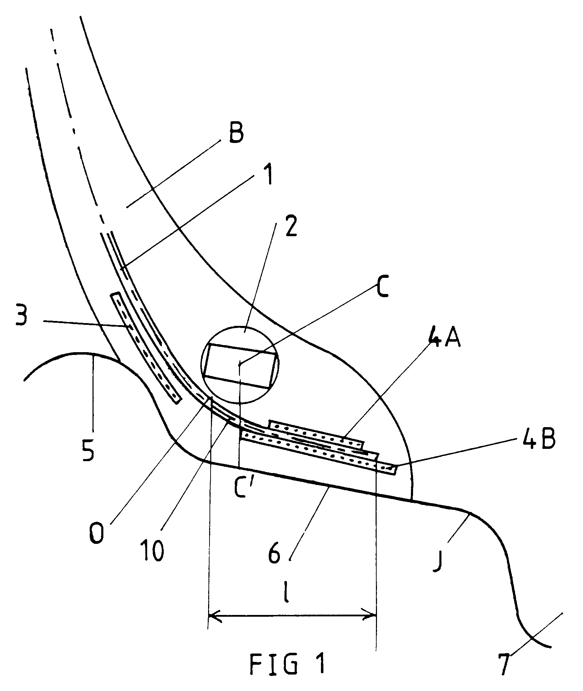

En se référant au dessin annexé, n'ayant qu'une seule figure, un exemple non limitatif est décrit, ladite figure étant une vue schématique en section méridienne d'un bourrelet de pneumatique, conforme à l'invention et monté sur sa jante de service.

Un pneumatique de dimension 295/60 R 22.5 X est monté sur sa jante de service J, formée de chaque côté d'un rebord de jante(5), prolongé axialement à l'intérieur d'un siège de jante (6), dont la génératrice tronconique fait avec une parallèle à l'axe de rotation un angle de 15°, les deux sièges de jante étant réunis à un fond de jante, présentant la gorge de montage (7). Sur chaque côté de la jante J, est monté un bourrelet B du pneumatique considéré. Dans ledit bourrelet, l'armature de carcasse (1), composée d'une seule nappe métallique, est retournée autour d'une tringle (2) à fils rectangulaires en allant de l'extérieur à l'intérieur pour former un retournement (10).

Ce retournement (10) a un profil méridien rectiligne et parallèle à la génératrice tronconique de la portion du siège de jante, situé axialement à l'intérieur de la projection C' du centre C du cercle circonscrit à la tringle (2) et faisant avec l'axe de rotation un angle de 15°. La fabrication de tels bourrelets ne permet pas d'affirmer que l'angle formé par le profil méridien dudit retournement fera avec l'axe de rotation un angle strictement égal à 15°, mais ledit angle sera par contre certainement compris dans l'intervalle 10°-20°.

Le retournement (10) de la nappe de carcasse (1) a une largeur axiale qui représente 0,08 fois la largeur axiale S maximale du pneumatique considéré.

Respectivement sur et sous le retournement (10) sont disposées des nappes (4A) et (4B) de câbles métalliques faisant avec la direction circonférentielle un angle nul. L'extrémité axialement intérieure de la nappe de renforcement (4A) radialement supérieure est légèrement plus éloignée du plan équatorial que ne l'est l'extrémité du retournement (10) de la nappe de carcasse (1), alors que l'extrémité axialement intérieure de la nappe de renforcement (4B) radialement inférieure est légèrement plus proche du plan équatorial que ne l'est l'extrémité du retournement (10).

Quant à l'armature de carcasse (1), radialement au niveau du rebord de jante (5), elle est renforcée par la présence axialement à l'extérieur d'une nappe de renforcement (3) de câbles métalliques orientés par rapport à la direction circonférentielle d'un angle égal, dans l'exemple décrit, à 20°.

Un pneumatique tel que décrit ci-dessus est avantageusement fabriqué par une méthode de fabrication telle que celle décrite dans la demande française FR-A-2 706 805.

## Revendications

1. Pneumatique à armature de carcasse radiale (1), surmontée radialement d'une armature de sommet, l'armature de carcasse (1) étant composée d'au moins une nappe de fils ou câbles et étant retournée dans chaque bourrelet autour d'une tringle (2) d'ancrage en allant de l'extérieur à l'intérieur pour former un retournement (10), ledit retournement (10) étant renforcé par au moins une nappe de renforcement (4A, 4B) additionnelle de câbles orientés par rapport à la direction circonférentielle d'un angle compris entre 0° et 20°, la valeur 0° étant incluse dans ledit intervalle, caractérisé en ce que le profil méridien dudit retournement (10) renforcé est rectiligne et sensiblement parallèle au profil méridien d'au moins la portion de siège de jante axialement à l'intérieur de la projection C' du centre C du cercle circonscrit à la tringle sur ledit siège de jante.

2. Pneumatique selon la revendication 1, caractérisé en ce que le retournement (10) de nappe de carcasse (1) est ancré entre deux nappes de renforcement (4A, 4B) additionnelles, disposées radialement de part et d'autre dudit retournement (10), et constituées de câbles métalliques orientés circonférentiellement.

3. Pneumatique selon l'une des revendications 1 à 2, caractérisé en ce que chaque retournement (10) a une largeur axiale l, mesurée parallèlement à l'axe de rotation et axialement à partir du point de tangence O de l'armature de carcasse (1) avec le cercle circonscrit à la tringle (2), au moins égale à 0,06 fois la largeur axiale maximale S du pneumatique monté sûr sa jante de service J, et gonflé à sa pression nominale recommandée.

4. Pneumatique selon l'une des revendications 1 à 3, caractérisé en ce que l'armature de carcasse (1), radialement au niveau du rebord de jante (5), est renforcée par une armature de renforcement additionnelle, formée d'au moins une nappe de renforcement (3), composée de fils ou câbles, métalliques ou textiles, et orientés par rapport à la direction circonférentielle d'un angle compris entre 0° et 30°.

## Claims

1. A tyre with radial carcass reinforcement (1), surmounted radially by a crown reinforcement, the carcass reinforcement (1) being formed of at least one ply of threads or cords and being turned up in each bead around an anchoring bead wire (2), going from the outside to the inside, so as to form a turn-up (10), said turn-up (10) being reinforced by at least one additional reinforcement ply (4A, 4B) of cables oriented by an angle of between 0° and 20° with respect to the circumferential direction, the value 0° being included within said range, characterised in that the meridian profile of said reinforced turn-up (10) is rectilinear and substantially parallel to the meridian profile of at least the portion of the rim seat axially to the inside of the projection C' of the centre C of the circle circumscribed on the bead wire on said rim seat.

2. A tyre according to Claim 1, characterised in that the turn-up (10) of the carcass ply (1) is anchored between two additional reinforcement plies (4A, 4B), disposed radially on either side of said turn-up (10) and formed of circumferentially oriented metal cables.

3. A tyre according to one of Claims 1 to 2, characterised in that each turn-up (10) has an axial width l, measured parallel to the axis of rotation and axially from the point of tangency O of the carcass reinforcement (1) with the circle circumscribed on the bead wire (2), which is equal to at least 0.06 times the maximum axial width S of the tyre mounted on its service rim J and inflated to its recommended nominal pressure.

4. A tyre according to one of Claims 1 to 3, characterised in that the carcass reinforcement (1) radially at the level of the rim flange (5) is reinforced by an additional reinforcement armature formed of at least one reinforcement ply (3) formed of metal or textile cords or cables oriented at an angle of between 0° and 30° with respect to the circumferential direction.

## Patentansprüche

1. Reifen mit radialer Karkassenbewehrung (1), radial oberhalb deren eine Scheitelbewehrung angebracht ist, wobei die Karkassenbewehrung (1) aus mindestens einer Einlage aus Drähten oder Seilen zusammengesetzt ist und in jedem Wulst um einen Verankerungs-Wulstkern (2) herumgeschlagen ist, wobei sie von der Außenseite zur Innenseite verläuft, um einen Umschlag (10) zu bilden, der genannte Umschlag (10) durch mindestens eine zusätzliche Verstärkungseinlage (4A, 4B) aus Seilen verstärkt ist, die in Bezug auf die Umfangsrichtung unter einem Winkel ausgerichtet sind, der zwischen 0° und 20° liegt, und der Wert 0° in das genannte Intervall miteingeschlossen ist,
**dadurch gekennzeichnet, daß**
das Meridianprofil des genannten, verstärkten Umschlags (10) geradlinig ist und im wesentlichen parallel zum Meridianprofil mindestens des Abschnitts des Felgensitzes axial auf der Innenseite der Projektion C' des Mittelpunktes C des Kreises, der dem Wulstkern auf dem genannten Felgensitz umschrieben ist.

2. Reifen nach Anspruch 1, dadurch gekennzeichnet, daß der Umschlag (10) der Karkasseneinlage (1) zwischen zwei zusätzlichen Verstärkungseinlagen (4A, 4B) verankert ist, die radial beiderseits des genannten Umschlags (10) angeordnet sind, und aus Metallseilen gebildet sind, die in Umfangsrichtung ausgerichtet sind.

3. Reifen nach einem der Ansprüche 1 bis 2, dadurch gekennzeichnet, daß jeder Umschlag (10) eine axiale Breite l aufweist, parallel zur Drehachse und axial vom Berührungspunkt O der Karkassenbewehrung (1) mit dem Kreis aus gemessen, der dem Wulstkern (2) umschrieben ist, die mindestens gleich ist dem 0,06-fachen der maximalen axialen Breite S des Reifens, der auf seiner Einsatzfelge J montiert und auf seinem empfohlenen Nenndruck aufgepumpt ist.

4. Reifen nach einem der Ansprüche 1 bis 3, dadurch gekennzeichnet, daß die Karkassenbewehrung (1) radial auf Höhe des Felgenrings (5) durch eine zusätzliche Verstärkungsbewehrung verstärkt ist, die aus mindestens einer Verstärkungseinlage (3) gebildet ist, die aus Drähten oder Seilen aus Metall oder Textilmaterial zusammengesetzt ist, die in Bezug auf die Umfangsrichtung unter einem Winkel ausgerichtet sind, der zwischen 0° und 30° liegt.
